# EUROPEAN PATENT APPLICATION

(11) **EP 0 561 041 A2**
(43) Date of publication of application: **22.09.1993**
(21) Application number: 92117844.8
(22) Date of filing: 19.10.1992
(51) Int. Cl.: G11B 15/675, G11B 17/04, G11B 33/02

(54) **Mounting device of a container of a recording medium in an information reproducing device**

(30) Priority: 19.03.1992 JP 93490/92
(71) Applicant: PIONEER ELECTRONIC CORPORATION, Meguro-ku Tokyo (JP)
(72) Inventor: Itoh, Taku, c/o Tokorozawa Koujou, Tokorozawa-shi, Saitama-ken (JP)
(74) Representative: Sajda, Wolf E., Dipl.-Phys.

(57) **Abstract**

A mounting device of a container (16) has a holder (13) for holding the container (16), a lowering mechanism (23-25) for lowering the holder (13), and a flap (12) pivotally mounted on the holder (13). The flap (12) comprises a first flap (12a) and a second flap (12b). The first flap (12a) is provided for closing an inlet (11) in an inoperative state and to be opened by the container (16) which is inserted into the casing (10). The second flap (12b) is provided to be pivoted together with the first flap (12a) and to close the inlet (11) when the holder (13) is lowered.

## Description

### BACKGROUND OF THE INVENTION

The present invention relates to a mounting device of a container device such as a cartridge and a cassette in an information reproducing device, and more particularly to a mounting structure of a flap for an inlet of such a reproducing device.

In an information reproducing device such as a cassette receiver, an inlet for loading or ejecting the cartridge or the cassette into or from the device is provided with a flap for closing the inlet, thereby preventing foreign material such as dust from entering into the device so as to protect the recording medium and an information reproducing mechanism in the device.

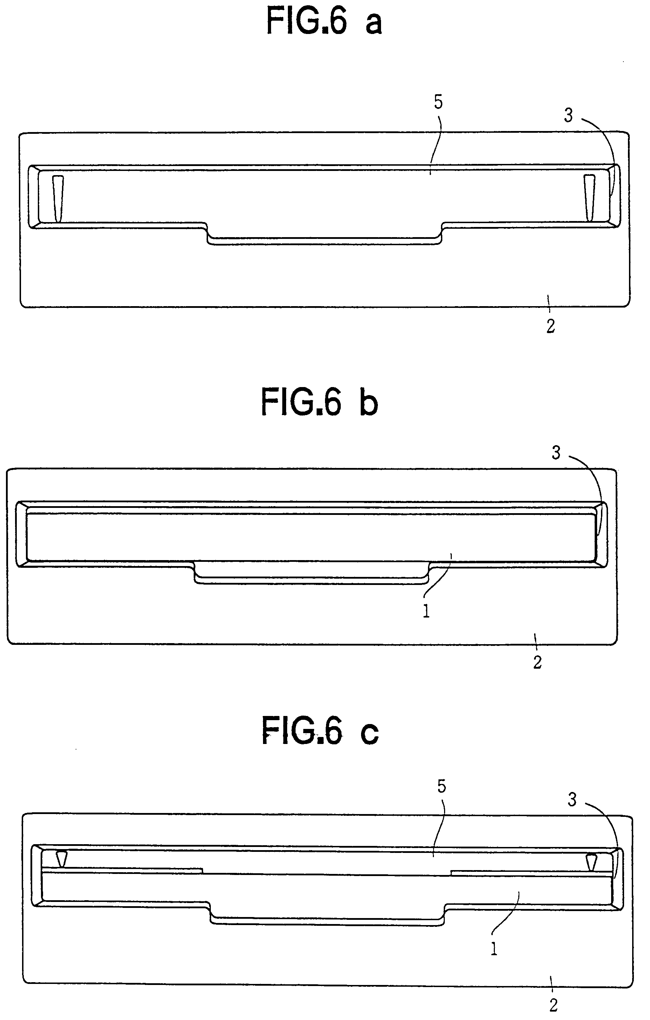

Figs. 6a to 7c show a main part of an information reproducing device having a conventional structure of a flap.

The device comprises a casing 2, an inlet 3 provided in a front panel of the casing 2, and a flap 5 for closing the inlet 3. The flap 5 is pivotally mounted on a pivot pin 6 secured to the inside of the casing 2 near the upper peripheral portion of the inlet 3 and urged by an elastic means such as a spring (not shown) to close the inlet 3. A cartridge holder 4 is provided in the casing 2 such that an opening thereof corresponds to the inlet 3. When a cartridge 1 such as a tape cartridge is inserted into the inlet 3, the holder 4 holds the cartridge 1 to load it on an information reproducing mechanism in the device.

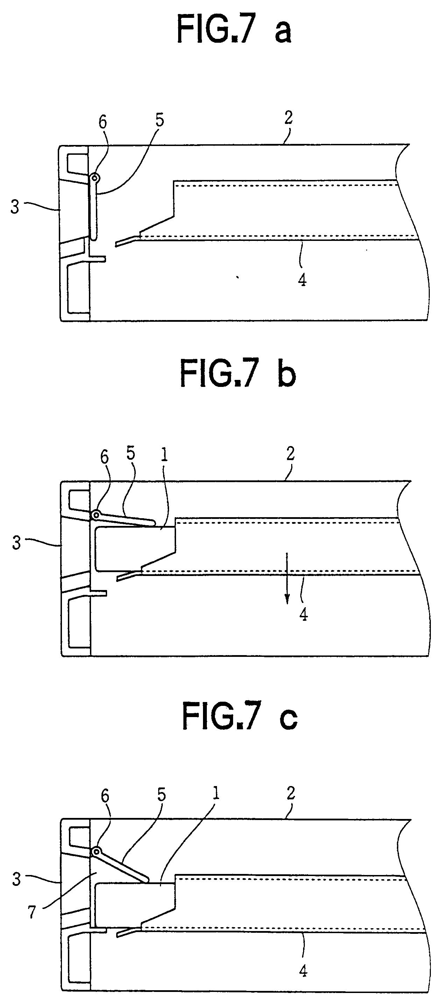

Concerning the operation of the flap 5, before setting the cartridge 1 into the casing 2, the flap 5 closes the inlet 3 as shown in Figs. 6a and 7a, thereby preventing dust from entering into the casing 2.

As shown in Figs. 6b and 7b, when the cartridge 1 is inserted into the inlet 3, the flap 5 is pushed inwardly and rotated upwardly about the pin 6 against the elastic force of the elastic means. When the cartridge 1 is completely mounted in the holder 4, the flap 5 is rotated to a position perpendicular to the inlet 3 and abutting against an upper surface of the cartridge 1.

Then, the holder 4 is moved downwardly by a loading device (not shown) to the reproducing mechanism (not shown) as shown in Fig. 7c. The flap 5 is rotated downwardly by the elastic means, keeping the engagement state with the upper surface of the cartridge 1. In the device, the flap 5 does not completely close the inlet 3 so that the cartridge 1 can easily be ejected from the inlet 3. As a result, a space 7 is formed inside the inlet 3, and the inlet 3 is not completely closed.

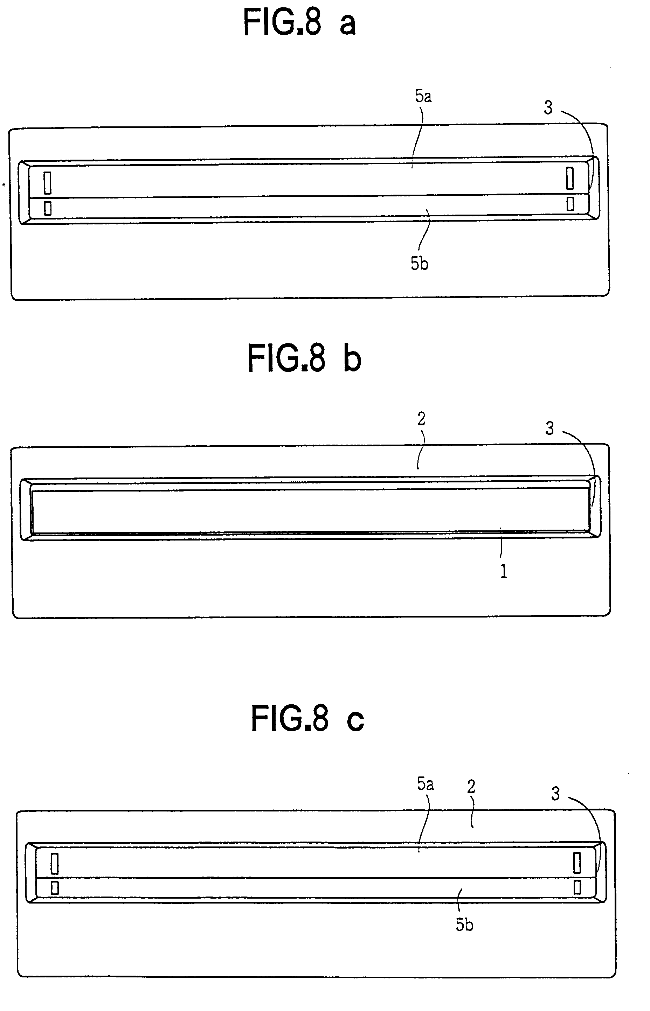

Figs. 8a to 9c show another conventional structure of a flap.

The inlet 3 of the casing 2 is provided with a pair of flaps, namely an upper flap 5a and a lower flap 5b. The upper flap 5a is pivotally mounted on a pivot pin 6a secured to an upper peripheral portion of the inlet 3 at the inside of the casing 2. The lower flap 5b is pivotally mounted on a pivot pin 6b secured to a lower peripheral portion of the inlet 3 corresponding to the upper flap 5a. The upper and lower flaps 5a and 5b are urged by respective elastic means (not shown) toward the inlet 3 so that the lower periphery of the upper flap 5a is engaged with the upper periphery of the lower flap 5b to close the inlet 3.

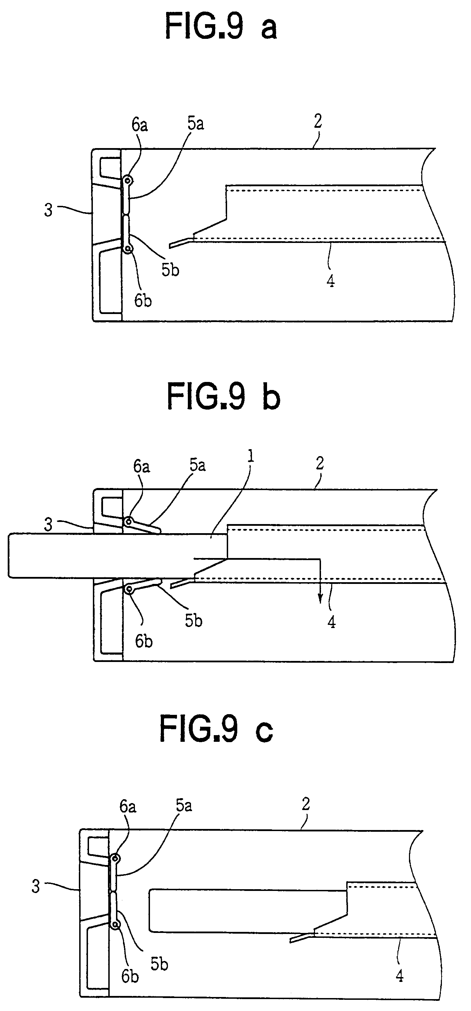

Figs. 8a and 9a show a situation where the inlet 3 is closed by the flaps 5a and 5b.

As shown in Figs. 8b and 9b, when the cartridge 1 is inserted into the inlet 3, the flaps 5a and 5b are pushed inwardly. The upper flap 5a is rotated upwardly about the pin 6a, while the lower flap 5b is rotated downwardly about the pin 6b, thereby opening the inlet 3. When the cartridge 1 is completely inserted into the holder 4, the holder is retracted inwardly by a loading device (not shown) and moved downwardly to the reproducing mechanism as shown in Fig. 9c. The flaps 5a and 5b are removed from the cartridge 1 and urged by the elastic.means to completely close the inlet 3 as shown in Figs. 8c and 9c.

In the former device, since the inlet 3 is not completely closed during reproducing the information, dust may enter into the casing 2 through the space 7. In order to eliminate such a trouble, the holder 4 containing the cartridge 1 must be moved in the casing 2 so as to disengage the flap 5 from the cartridge 1. However, such a moving mechanism brings about the consequence that the size of the device increases.

In the latter device, it is possible to close the inlet 3 completely by the flaps 5a and 5b without increasing the size of the device. However, it is necessary to provide two pivot pins 6a and 6b for the flaps and a mechanism to open the flaps when ejecting the cartridge 1 from the inlet 3. Accordingly, the number of parts is increased and the construction becomes complicated.

### SUMMARY OF THE INVENTION

An object of the present invention is to provide a mounting structure of a cartridge for an information reproducing device which prevents dust from entering into the device during the playback operation and has a simple construction without increasing the size of the device.

According to the present invention, there is provided a mounting device of a container of a recording medium in an information reproducing device having a casing with an inlet for the container, comprising a holder for holding the container, the holder being located inside the inlet and provided to be moved downwardly, a lowering mechanism for lowering the holder, and a flap pivotally mounted on the holder at a front portion thereof.

The flap comprises a first flap provided for closing the inlet in an inoperative state and to be opened by the container which is inserted into the casing, and a second flap provided to be pivoted together with the first flap and to close at least a part of the inlet when the holder is lowered. The lowering mechanism comprises a slide frame provided to be slid by the inserted container, and cam grooves for lowering the holder.

In the present invention, the flap is mounted on the holder so that the rotating operation of the flap does not interfere with the vertical movement of the holder. Thus, it is possible to provide a compact design to ensure the closing of the inlet. Since it is not necessary to provide the driving mechanism for opening the flap, the device is simplified in construction.

The other objects and features of this invention will become apparent from the following description with reference to the accompanying drawings.

### BRIEF DESCRIPTION OF THE DRAWINGS

- Figs. 1a to 1c: are front views showing a main part of an information reproducing device according to the present invention;
- Figs. 2a to 2c: are sectional side views partly showing the information reproducing device;
- Fig. 3: is a perspective view showing a supporting mechanism of a flap;
- Figs. 4 and 5: show a lowering mechanism for a housing;
- Figs. 6a to 6c: are front views showing a conventional information reproducing device;
- Figs. 7a to 7c: are sectional side views partly showing the conventional device of Figs. 6a to 6c;
- Figs. 8a to 8c: are front views showing another conventional information reproducing device; and
- Figs. 9a to 9c: are sectional side views partly showing the device of Figs. 8a to 8c.

### DETAILED DESCRIPTION OF THE PREFERRED EMBODIMENTS

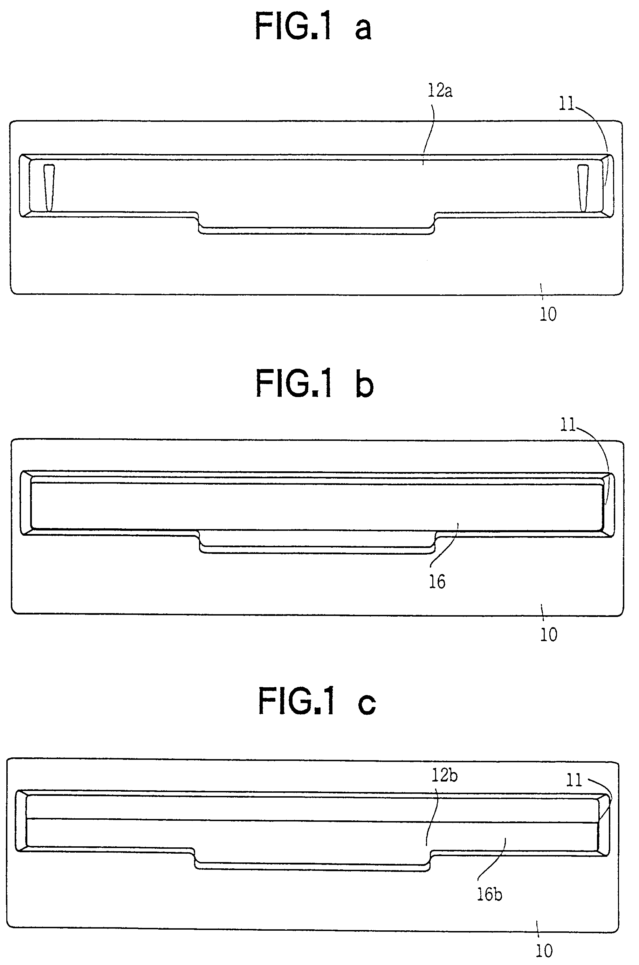

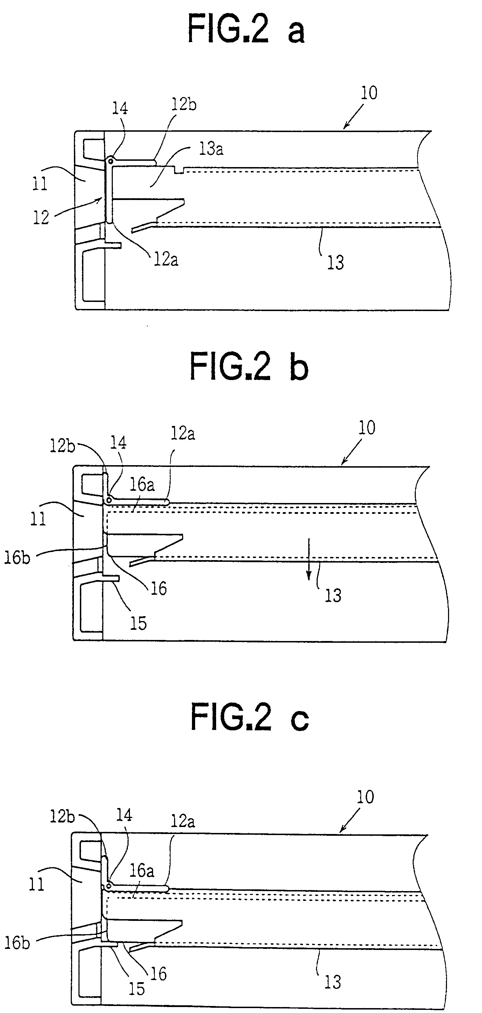

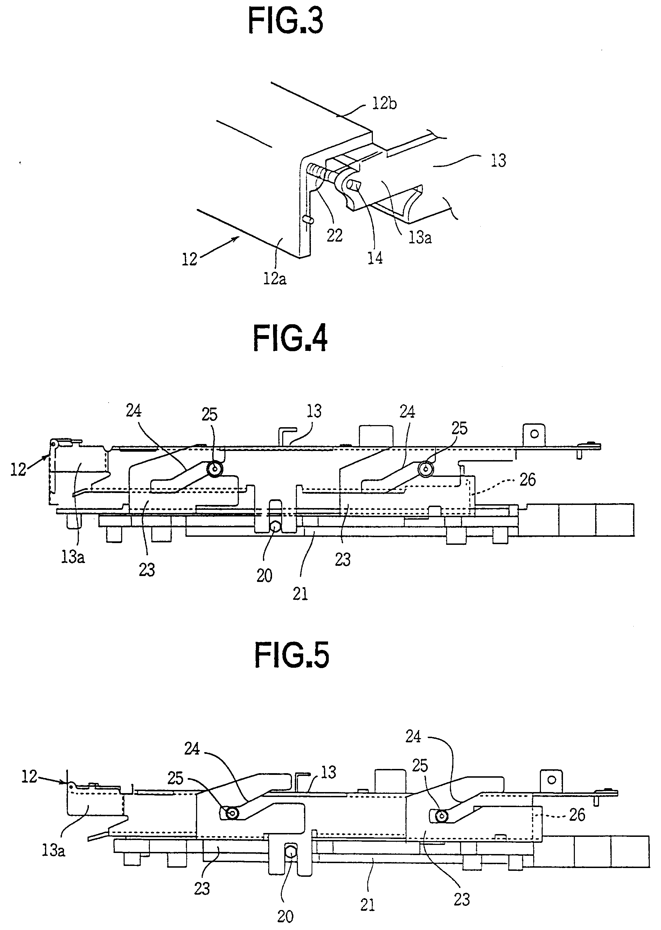

Referring to Figs. 1 and 2 showing a main part of an information reproducing device according to the present invention, the device comprises a casing 10, an inlet 11, and a flap 12 for closing the inlet 11. A cartridge holder 13 is provided in the casing 10 corresponding to the inlet 11. Referring to Fig. 4, the cartridge holder 13 is vertically slidably mounted on opposite pins 20 secured to a frame 21 of the casing 10. The holder 13 has a pair of supporting portions 13a at the front end thereof, projected from the opposite side plates thereof toward the inlet 11. As shown in Fig. 3, the supporting portions 13a have pivot pins 14 on which the flap 12 is pivotally mounted. The flap 12 has an L-shaped section comprising a first flap 12a and a second flap 12b integrated with the first flap 12a and provided perpendicular to the first flap 12a. The flap 12 is urged or biassed by a spring 22 in the clockwise direction in Fig. 2a about the pins 14 toward the inlet 11 .

Referring to Fig. 4, a slide frame 23 is slidably mounted on the frame 21. The slide frame 23 has a pair of cam grooves 24 at each side thereof. The cam grooves 24 slidably engage with pins 25 mounted on the cartridge holder 13. The casing 10 is provided with a projection 15 on a lower portion of the inlet 11 for regulating a lowering movement of the holder 13.

Concerning the operation of the device, Figs. 1a and 2a show a situation of the flap 12 where no recording medium is mounted in the casing 10. When a cartridge 16 is inserted into the inlet 11 as shown in Fig. 1b, the first flap 12a is pushed inwardly so as to be rotated about the pins 14 in the counter-clockwise direction in Fig. 2b. The cartridge 16 is inserted into the cartridge holder 13, while the first flap 12a is rotated to the position perpendicular to the inlet 11 in accordance with the upper surface 16a of the cartridge 16.

Immediately before the cartridge 16 reaches an innermost end position in the holder 13, the inner end of the cartridge 16 abuts against a projection 26 formed at an inner end portion of the slide frame 21. Consequently, the slide frame 21 is moved to the right in Fig. 4, so that the cam grooves 24 of the slide frame 23 push the pins 25 downwardly. Thus, the holder 13 is lowered as shown in Figs. 2c and 5.

The flap 12 is lowered together with the holder 13, while the first flap 12a is abutted against the upper surface 16a of the cartridge 16 by the spring 22, and the second flap 12b engages with the inside wall of the casing 10 on an upper portion of the inlet 11. In this state, since the flap 12a engages with the upper surface 16a of the cartridge 16 and a rear end portion 16b of the cartridge 16 closes the inlet 11, any dust is prevented from entering into the casing 10.

As shown in Fig. 2c, an underside 16c of the cartridge 16 engages with the projection 15. During reproducing information recorded on the recording medium, any dust is prevented from entering into the device.

In the present invention, the first flap 12a and the second flap 12b may be formed separately as far as these flaps 12a, 12b are adapted to be rotated together.

If the second flap 12b has a greater height than that of the inlet 11, the inlet 11 may be closed only by the second flap 12b. In that case, the projection 15 is positioned so as to locate the cartridge 16 lower than the inlet 11.

In accordance with the present invention, a flap for the inlet of the casing comprises a first flap and a second flap and is pivotally mounted on the holder of the cartridge. During reproducing any information, the inlet is closed completely by the second flap and the cartridge without increasing the size of the device, thereby preventing any dust from entering into the device. Since the flap is operated with the movement of the cartridge, it is not necessary to provide a driving mechanism for opening the flap.

While the presently preferred embodiments of the present invention have been shown and described, it is to be understood that this disclosure is for the purpose of illustration only and that various changes and modifications may be made without departing from the scope of the invention.

## Claims

1. A mounting device of a container (16) of a recording medium in an information reproducing device having a casing (10) with an inlet (11) for the container (16), comprising:
- a holder (13) for holding the container (16), the holder (13) being located inside the inlet (11) and provided to be moved downwardly;
- a lowering mechanism (23-25) for lowering the holder (13);
- a flap (12; 12a, 12b) pivotally mounted on the holder (13) at a front portion thereof;
- the flap (12; 12a, 12b) comprising a first flap (12a) provided for closing the inlet (11) in an inoperative state and to be opened by the container (16) which is inserted into the casing (10), and a second flap (12b) provided to be pivoted together with the first flap (12a) and to close at least a part of the inlet (11) when the holder (13) is lowered.

2. The mounting device according to claim 1,
wherein the first flap (12a) and the second flap (12b) are integral (12) with each other.

3. The mounting device according to claim 1 or 2,
wherein the lowering mechanism (23-25) comprises a slide frame (23) provided to be slid by the inserted container (16), and cam grooves (24) for lowering the holder (13).
